# EUROPEAN PATENT SPECIFICATION

(11) **EP 4 577 937 B1**
(45) Date of publication and mention of the grant of the patent: **08.07.2026**
(21) Application number: 23857924.7
(22) Date of filing: 16.08.2023
(51) Int. Cl.: G06F 21/71, G06N 5/04, G06F 21/31, H04L 9/40

(54) **SYSTEM AND METHOD FOR PERFORMING DEVICE ISOLATION IN AN AUTHENTICATION NETWORK**
SYSTEM UND VERFAHREN ZUR DURCHFÜHRUNG EINER GERÄTEISOLIERUNG IN EINEM AUTHENTIFIZIERUNGSNETZWERK
SYSTÈME ET PROCÉDÉ POUR EFFECTUER UNE ISOLATION DE DISPOSITIF DANS UN RÉSEAU D'AUTHENTIFICATION

(30) Priority: 22.08.2022 US 202263400012 P
(43) Date of publication of application: 02.07.2025
(73) Proprietor: Visa International Service Association, San Francisco, California 94128 (US)
(72) Inventor: G S, Nithyaraj, Vellode (VIA), Erode (IN); WICKES, David, Highlands Ranch, CO (US)
(74) Representative: EIP
(86) International application number: PCT/US2023/030398
(87) International publication number: WO 2024/044081

(56) References cited:
- WO-A1-2018/005708
- US-A1- 2019 174 318
- US-A1- 2019 236 249
- US-A1- 2021 058 395
- US-A1- 2021 304 207
- US-A1- 2022 092 159
- US-B1- 10 824 702

## Description

### CROSS-REFERENCE TO RELATED APPLICATION

This patent application claims the benefit of U.S. Provisional Patent Application Serial No. 63/400,012, filed August 22, 2022, titled "SYSTEM AND METHOD FOR PERFORMING DEVICE ISOLATION IN AN AUTHENTICATION NETWORK"

### BACKGROUND

The background description provided herein is for the purpose of generally presenting the context of the disclosure. Work of the presently named inventor(s), to the extent it is described in this background section, as well as aspects of the description that may not otherwise qualify as prior art at the time of filing, are neither expressly nor impliedly admitted as prior art against the present disclosure.

The security of an authentication network is of upmost importance to the users of the authentication network. In order to prevent the unauthorized access to the authentication network by nefarious actors, the authentication network should be designed to ensure that user devices registered with a user of the authentication network remain trustworthy while connected to the authentication network. User devices that are not secure should be isolated from the authentication network to prevent disruption of the authentication network or misuse of the user device. Therefore, a need exists to provide an authentication network that prevents unauthorized user devices from accessing the authentication network. Known art includes US 2019/236249 A1 (which discloses a method for detecting unauthorized users in an authentication network by monitoring and analysing behaviour patterns of a user as a whole), US 10 824 702 B1 (which discloses a system for authenticating a user entity and identifying abnormalities in network access attempts to measure transaction risk), and US 2022/092159 A1 (which authentication measures to increase security and reduce the potential that a user's personal information is compromised).

### BRIEF DESCRIPTION OF THE DRAWINGS

FIG. 1A illustrates a block diagram of a system in accordance with some embodiments.
FIG. 1B illustrates a block diagram of an isolation system in accordance with some embodiments.
FIG. 2 illustrates a block diagram of an isolation unit in accordance with some embodiments.
FIG. 3 is a table that illustrates isolation actions performed by the isolation unit of FIG. 2 in accordance with some embodiments.
FIG. 4 is a flow diagram illustrating a method for performing user device isolation in accordance with some embodiments.

### DETAILED DESCRIPTION

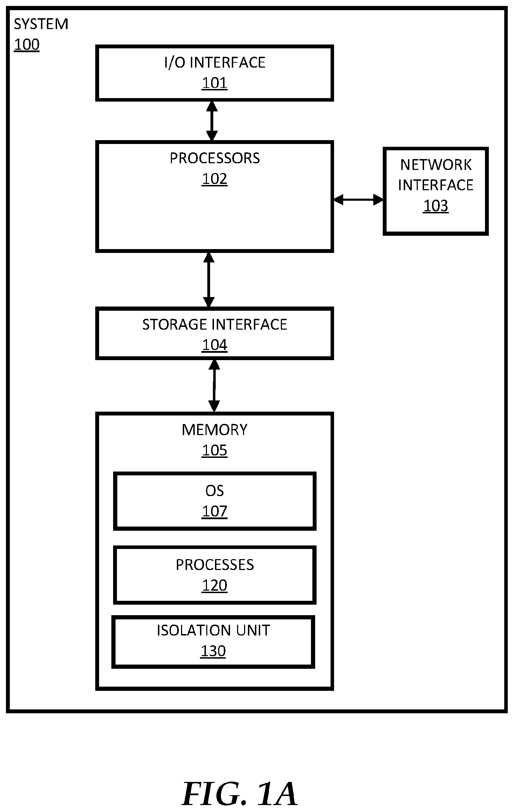

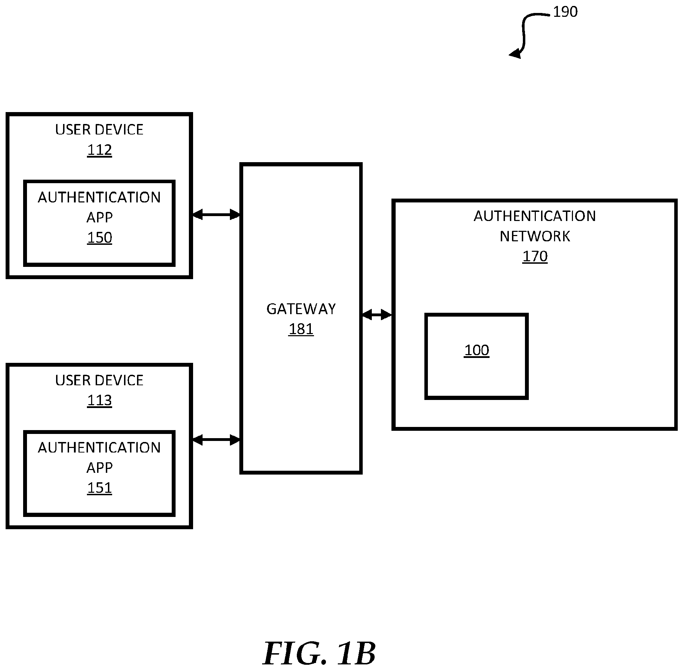

FIG. 1A illustrates a block diagram of an exemplary system 100 for implementing embodiments consistent with the present disclosure. In some embodiments, the system 100 includes an input/output (IO) interface 101, processor/s 102, a storage interface 104, a network interface 103, and memory 105. In some embodiments, memory 105 may include an operating system 107, processes 120, and an isolation unit 130. In some nonlimiting embodiments or aspects, the system 100 may utilize the isolation unit 130 to implement a method for isolating a user device in an authentication network (illustrated by way of example in FIG. 1B) as described further herein.

In some embodiments, the processors 102 may comprise at least one data processor for executing program components for dynamic resource allocation at run time. The processor 102 may include specialized processing units such as integrated system (bus) controllers, memory management control units, floating point units, graphics processing units, digital signal processing units, etc. In some embodiments, the processors 102 may be disposed in communication with one or more input/output (I/O) devices (not shown) via an I/O interface 101. The I/O interface 101 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMi), RF antennas, S-Video, VGA, IEEE 802.1 n /b/g/n/x, Bluetooth^{®}, cellular (e.g., code-division multiple access (CDMA), high-speed packet access (HSPA+), global system for mobile communications (GSM), long-term evolution (LTE), WiMax^{®}, or the like), etc.

In some embodiments, using the I/O interface 101, the system 100 may communicate with one or more I/O devices. For example, an input device (not shown) may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. An output device (not shown) may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the processors 102 may be disposed in communication with a communication network or other type of network via a network interface 103. The network interface 103 may communicate with the communication network. The network interface 103 may employ connection protocols including, without limitation, direct connect, Ethernet (e.g., twisted pair 10/100/1000 Base T), transmission control protocol/Internet protocol (TCP/IP), token ring, IEEE 802.11a/b/g/n/x, etc. The communication network may include, without limitation, a direct interconnection, e-commerce network, a peer to peer (P2P) network, local area network (LAN), wide area network (WAN). wireless network (e.g., using Wireless Application Protocol), the internet, Wi-Fi^{®}, etc. Using the network interface 103) and the communication network, the system 100 may communicate with the one or more service operators.

In some non-limiting embodiments or aspects, the processors 102 may be disposed in communication with a memory 105 (e.g., RAM, ROM, etc.) via a storage interface 104. In some embodiments, the storage interface 104 may connect to memory 105 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems interface (SCSI), etc. The memory drives may further include a drum, magnetic disc drive, magneto-optical drive, optical drive, Redundant Array of Independent Discs (RAID), solid-state memory devices, solid- state drives, etc.

In some embodiments, the memory 105 may store a collection of program or database components, including, without limitation, a user interface, an operating system 107, a web server, etc. In some non-limiting embodiments or aspects, the system 100 may store user/application data, such as the data, variables, records, etc. as described in this disclosure. Such databases may be implemented as fault-tolerant, relational, scalable, secure databases such as Oracle or Sybase.

In some embodiments, the operating system 107 may facilitate resource management and operation of the system 100. Examples of operating systems include, without limitation, APPLE^{®} MACINTOSH^{®} OS X^{®}, UNIX^{®}, UNIX-like system distributions (E.G., BERKELEY SOFTWARE DISTRIBUTION^{®} (BSD), FREEBSD^{®}, NETBSD^{®}, OPENBSD, etc.), LINUX^{®} DISTRIBUTIONS (E.G., RED HAT^{®}, UBUNTU^{®}, KUBUNTU^{®}, etc.), IBM^{®}OS/2^{®}, MICROSOFT^{®} WINDOWS^{®} (XP^{®}, VISTA^{®}/7/8, 10 etc.), APPLE^{®} OS^{®}, GOOGLE^{™} ANDROID^{™}, BLACKBERRY^{®} OS, or the like.

In some non-limiting embodiments or aspects, the system 100 may implement a web browser (not shown in the figures) stored program component. The web browser (not shown in the figures) may be a hypertext viewing application, such as MICROSOFT^{®} INTERNET EXPLORER^{®}, GOOGLE^{™} CHROME^{™}, MOZILLA^{®} FIREFOX^{®}, APPLE^{®} SAFARI^{®}, etc. Secure web browsing may be provided using Secure Hypertext Transport Protocol (HTTPS), Secure Sockets Layer (SSL), Transport Layer Security (TLS), etc. Web browsers may utilize facilities such as AJAX, DHTML, ADOBE^{®} FLASH^{®}, JAVASCRIPT^{®}, JAVA^{®}, Application Programming Interfaces (APIs), etc.

In some embodiments, "authentication" may refer to the process of verifying the identity of a user or user device associated with a user for access to a network or applications operating on a network or user device. In some embodiments, one form of authentication may be biometric authentication. In some embodiment, biometric authentication is authentication of the user or user device using a "biometric", e.g., any human characteristic unique to an individual or user. In some embodiments, for example, a biometric may be a person's fingerprint, face, DNA, etc. In some embodiments, another form of authentication is two-factor authentication or multi-factor authentication. In some embodiments, two-factor authentication or multi-factor authentication is an authentication method in which a user or user device is granted access to the authentication network only after successfully presenting two or more pieces of evidence, such as, for example, a unique code or password.

Furthermore, one or more computer-readable storage media may be utilized in implementing embodiments consistent with the present disclosure. In some embodiments, a computer- readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, e.g., non-transitory. Examples include Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

FIG. 1B illustrates a diagram of an isolation system 190 in accordance with some embodiments. In some embodiments, the isolation system 190 includes a user device 112, a user device 113, a gateway 181, and an authentication network 170. In some embodiments, as stated previously with reference to FIG. 1A, the term authentication may refer to the process of verifying the identity of a user or user device associated with a user for access to a network or applications operating on a network or user device. In some embodiments, the authentication network 170 may be, for example, a network that performs the process of verifying the identity of the user or user device (e.g., the user of user device 112 and the user device 113) for access to the network or applications operating on the network or user device. In some embodiments, authentication network 170 may include or connect to a plurality of servers, computers, and user devices across a number of protocols through a network gateway, such as gateway 181. In some embodiments, user device 112 and user device 113 may be, for example, a mobile phone, a tablet, a laptop, or some other type of computer device. In some embodiments, the user device 112 includes an authentication application 150 and the user device 113 includes an authentication application 151. In some embodiments, the authentication application 150 may be an authentication application configured to be used by a user of the user device 112 to register and authenticate the user device 112 with the authentication network 170. In some embodiments, the authentication application 151 may be an authentication application configured to be used by a user of the user device 113 to register and authenticate the user device 113 with the authentication network 170. In some embodiments, registration of the user device 112 and user device 113 and the user associated with user device 112 and user device 113 with authentication network 170 may entail providing information unique to the user device 112, the user device 113, and the user of the user device 112 and user device 113 via, for example, authentication application 150 and/or authentication application 151. In some embodiments, the information may include, for example, a name of the user, an address of the user, account information associated with the user, and unique user device identifiers associated with the user device. In some embodiments, although two user devices (e.g., user device 112 and user device 113) are illustrated in FIG. 1B as being registered to a user with the authentication network 170, there may be additional user devices and/or users of the user devices registered with the authentication network 170.

In some embodiments, the authentication network 170 may register the user device 112 or the user device 113 with one or more accounts associated with the user of user device 112 and user device 113 (e.g., a bank account of associated with a user of the user device 112). In some embodiments, the authentication network 170 may register the user device 112 with the one or more accounts by linking one or more unique device identifiers of the user device 112 (e.g., a unique application identifier associated with an authentication application installed on user device 112, a media access control (MAC) address of the user device 112, an identifier assigned to the user device 112 by the authentication network 170, and/or the like) with the one or more accounts. In some embodiments, similarly, the authentication network 170 may register the user device 113 with the one or more accounts by linking one or more unique device identifiers of the user device 113 with the one or more accounts.

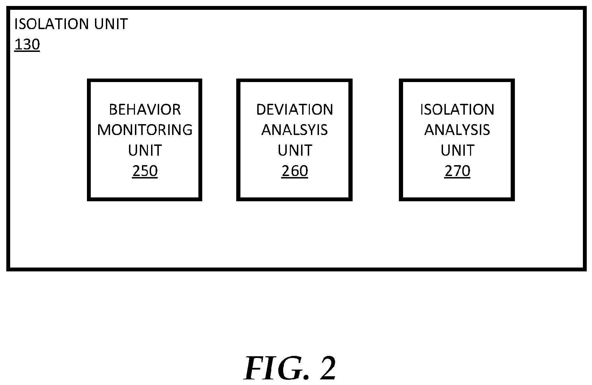

In some embodiments, isolation system 190 is configured to perform an isolation analysis of each user device registered with the authentication network 170 to determine whether to isolate the user device from the authentication network 170. In some embodiments, as part of the isolation analysis, isolation system 190 continuously assesses and performs a behavior analysis of each user device registered with authentication network 170 to determine whether the user device 112 or the user device 113 should be isolated from the authentication network 170, as described further below with reference to FIG. 2 - FIG. 4.

FIG. 2 illustrates an isolation unit 130 of FIG. 1A in accordance with some embodiments. In some embodiments, the isolation unit 130 is executable code configured to isolate a user device or user devices in an authentication network (e.g., authentication network 170) based upon an isolation analysis of each user device (e.g., user device 112 and user device 113) in the authentication network. In some embodiments, isolation unit 130 includes a behavior monitoring unit 250, a deviation analysis unit 260, and an isolation analysis unit 270. In some embodiments, the behavior monitoring unit 250 is executable code configured to monitor the behavior of a user and/or user devices registered with authentication network 170. In some embodiments, deviation analysis unit 260 is executable code configured to analyze a deviation in behavior of a user and/or user device from conventional behavior of the user and/or user device. In some embodiments, isolation analysis unit 270 is executable code configured to perform an isolation analysis of a user and/or user device to determine whether the user device should be isolated from the authentication network 170. In some embodiments, the behavior monitoring unit 250, the deviation analysis unit 260, and the isolation analysis unit 270 are collectively configured to analyze the behavior of user devices in an authentication network 170, determine the deviation of the behavior of user devices from conventional behavior of the user devices in the authentication network 170, and determine whether a user device of the user devices should be isolated from the authentication network 170 based upon the results of an isolation analysis as described further herein.

In some embodiments, in operation, behavior monitoring unit 250 monitors the behavior of each user device (e.g., user device 112 and user device 113) registered by a user with authentication network 170. In some embodiments, the behavior monitoring unit 250 monitors the behavior of each user device by collecting behavior data associated with each user device. In some embodiments, the behavior data collected by the behavior monitoring unit 250 may include, for example, swiping patterns associated with a user device, typing patterns associated with a user device, location data associated with a user device, navigation paths associated a user device, touch heatmaps associated with a user device, battery usage associated with a user device, application (App) usage details associated with a user device, accelerometer data associated with a user device, device security usage patterns associated with a user device, screen views associated with a user device, various sessions associated with a user device, and time data associated with a user device. In some embodiments, the behavior data is collected by the behavior monitoring unit 250 and stored in a database associated with the authentication network 170 that is configured to store the behavior data for further processing.

In some embodiments, while (or after) the behavior data is collected by behavior monitoring unit 250, behavior monitoring unit 250 utilizes the behavior data to generate a behavioral accuracy score for each user device. In some embodiments, the behavioral accuracy score is a numerical score indicative of the accuracy of the behavior associated with a user device. In some embodiments, behavior monitoring unit 250 utilizes a machine learning model generated using machine learning techniques to generate the behavioral accuracy score. In some embodiments, for example, unsupervised machine learning techniques (e.g., K-means clustering, mixture models, hierarchical clustering), supervised machine learning techniques (e.g., decision tree analysis, classification and regression tree, KNN (K- Nearest Neighbor), random forests), change models (pre- vs. post event), time series analysis and neural networks may be used to generate the machine learning model that is used to generate the behavioral accuracy score. In some embodiments, the machine learning techniques may be applied to the behavior data to generate a statistical pattern over the history of the behavior data and extract individual unique behavior with respect to each device for a particular user.

In some embodiments, after generating the behavioral accuracy score, behavior monitoring unit 250 determines the accuracy level of the behavior accuracy score (e.g., whether the behavioral accuracy score is a low behavioral accuracy score, a medium behavioral accuracy score, or a high behavioral accuracy score) by comparing the behavior accuracy score to a predetermined number of behavioral accuracy score categories. In some embodiments, the behavioral accuracy score categories are categories that indicate the accuracy level of the behavior of the user device. In some embodiments, the behavior accuracy score categories include a first behavioral accuracy score category, a second behavioral accuracy score category, and a third behavioral accuracy score category. In some embodiments, the first behavioral accuracy score category is a high behavioral accuracy score category, the second behavioral accuracy score category is a medium behavioral accuracy score category, the third behavioral accuracy score category is a low behavioral accuracy score category. In some embodiments, after the behavior accuracy score category associated with the behavior accuracy score is generated by behavior monitoring unit 250, behavior monitoring unit 250 provides the behavioral accuracy score and the associated behavior accuracy score category to isolation analysis unit 270 and deviation analysis unit 260 for further processing.

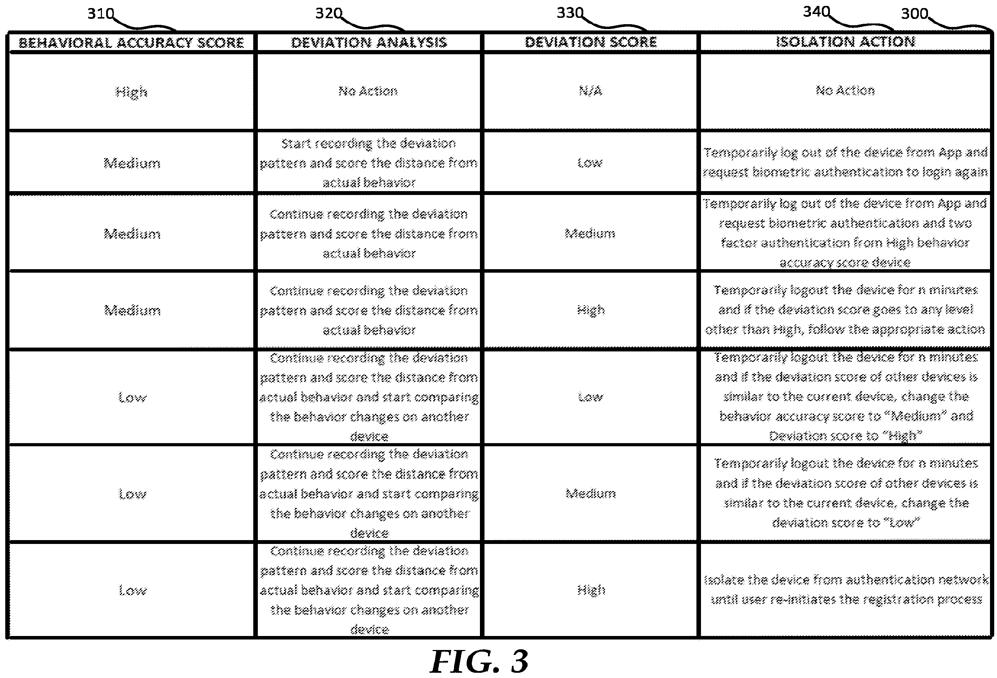

In some embodiments, deviation analysis unit 260 receives the behavioral accuracy score and the behavioral accuracy score category and assesses the behavioral accuracy score category to determine whether to perform a deviation analysis of the user device associated with the behavior accuracy score. In some embodiments, as described further herein with reference to FIG. 3, the deviation analysis may include, for example, commencing the process of recording a deviation from conventional behavior of the user device to actual behavior (e.g., current behavior) of the user device, generating a deviation score using the deviation from the conventional behavior of the user device to the actual behavior of user device, and comparing behavior changes on another user device or user devices. In some embodiments, the conventional behavior of the user device is the typical behavior of the user device associated with a high behavioral accuracy score. In some embodiments, for example, when deviation analysis unit 260 assesses the behavior accuracy score category and determines that the behavioral accuracy score has been categorized as a high behavioral accuracy score, the deviation analysis unit 260 does not perform the deviation analysis and does not record deviation patterns of the behavior of the user device from the conventional behavior of the user device.

In some embodiments, when deviation analysis unit 260 determines that the behavioral accuracy score has been categorized as a medium behavioral accuracy score, the deviation analysis unit 260 records deviation patterns and associated deviation data of the behavior of the user device from the conventional behavior of the user device and scores the distance from the actual behavior of the user device to the conventional behavior of user device (e.g., generates a deviation score for the user device as described further herein).

In some embodiments, when the deviation analysis unit 260 determines that the behavioral accuracy score has been categorized as a low behavior accuracy score, in addition to recording the deviation pattern and scoring the distance from actual behavior to the conventional behavior of the user device, the isolation unit 130 starts comparing the behavior changes on another device (e.g., comparing the behavior changes on another user device registered to the user to the behavior changes of the current user device registered to the user).

In some embodiments, with further reference to the generation of the deviation score by deviation analysis 260, as the deviation analysis unit 260 is recording or collecting deviation patterns and associated deviation data, deviation analysis unit 260 utilizes the deviation data to generate the deviation score for each user device of the plurality of user devices. In some embodiments, the deviation score is a numerical score indicative of the deviation of the behavior associated with a user device from conventional behavior of the user device. In some embodiments, deviation analysis unit 260 may utilize a machine learning model generated using the aforementioned machine learning techniques to generate the deviation score. In some embodiments, a deviation score is generated for each user device of the plurality of user devices in the authentication network 170 based on the deviation of behavior of each user device of the plurality of user devices. In some embodiments, the deviation score is further utilized by the deviation analysis unit 260 to generate the associated deviation score category.

In some embodiments, after generating the deviation score, deviation analysis unit 260 analyzes the deviation score and determines the deviation score level of the deviation score (e.g., whether the deviation score is a low deviation score, a medium deviation score, or a high deviation score). In some embodiments, deviation analysis unit 260 determines whether the deviation score is a low deviation score, a medium deviation score, or a high deviation score by comparing the score to a predetermined number of deviation score categories. In some embodiments, the deviation score categories are categories that indicate the deviation level of the user device (e.g., a categorical representation of deviation of the behavior of the user device from conventional behavior of the user device). In some embodiments, the deviation score categories include a first deviation score category, a second deviation score category, and a third deviation score category. In some embodiments, the first deviation score category is a low deviation score category, the second deviation score category is a medium deviation score category, the third deviation score category is a high deviation score category. In some embodiments, the deviation score and deviation score category generated by deviation analysis unit 260 are provided to isolation analysis unit 270 for further isolation analysis processing.

In some embodiments, isolation analysis unit 270 receives the behavioral accuracy score (and associated behavior accuracy score category) from behavior monitoring unit 250 and the deviation score (and associated deviation score category) from deviation analysis unit 260 and assesses the categorization of the deviation score and the behavioral accuracy score to determine whether to isolate a user device (e.g., user device 112 or user device 113) from the authentication network 170. In some embodiments, for example, as illustrated in Table 300 of FIG. 3, when isolation analysis unit 270 determines that the behavioral accuracy score is within the second behavioral accuracy score category (e.g., medium behavioral accuracy score category) and the deviation score is within the first deviation score category (e.g., low deviation score category), the associated user device is temporally logged out from the authentication network 170 by isolation unit 130 and biometric authentication is requested from the user of the user device by authentication network 170 to login to the authentication network 170. In some embodiments, after the user provides the biometric information and is biometrically authenticated, the temporary logout of the user device is lifted by the isolation unit 130 and the user device is allowed to login to the authentication network 170.

In some embodiments, when isolation analysis unit 270 determines that the behavioral accuracy score is within the second behavioral accuracy score category (e.g., medium behavioral accuracy score category) and the deviation score is within the second deviation score category (e.g., medium deviation score category), the associated user device is temporally logged out from the authentication network 170 by isolation unit 130 and biometric authentication and two-factor authentication is requested from the user associated with the user device to login to the authentication network 170. In some embodiments, the biometric authentication and two-factor authentication is requested from the user from a user device associated with the user that has received a high behavioral accuracy score (e.g., a "high confidence" device). In some embodiments, after the user is biometrically authenticated and the two-factor authentication is completed, the temporary logout of the user device is lifted by the isolation unit 130 and the user device is allowed to login to the authentication network 170.

In some embodiments, when isolation analysis unit 270 determines that the behavioral accuracy score is within the second behavioral accuracy score category (e.g., medium behavioral accuracy score category) and the deviation score is within the third deviation score category (e.g., high deviation score category), the user device is temporally logged out from the authentication network 170 by isolation unit 130 for a fixed duration of time (e.g., a fixed number of seconds, m, or a fixed number minutes, n) and a further assessment of the deviation score by isolation analysis unit 270 dictates the action of isolation unit 130. In some embodiments, for example, when a determination is made by the isolation analysis unit 270 that the deviation score is not in the third deviation score category (e.g., a high deviation score category), the isolation unit 130 proceeds with actions corresponding to the first deviation score category (e.g., low deviation score category) or the second deviation score category (e.g., medium deviation score category).

In some embodiments, when isolation analysis unit 270 determines that the behavioral accuracy score is within the third behavioral accuracy score category (e.g., low behavioral accuracy score category) and the deviation score is within the first deviation score category (e.g., low deviation score category), the user device is temporally logged out from the authentication network 170 for a fixed amount of time (e.g., n minutes) and based upon a similarity assessment of deviation scores of the plurality of user devices that are not the associated user device, the behavioral accuracy score of the user device is adjusted such that the behavioral accuracy score is in the second behavioral accuracy score category and the deviation score of the user device is in the third deviation score category. For example, in some embodiments, if the deviation score of the other user devices registered to the user is similar to the deviation score of the current user device registered with the user, the behavior accuracy score is adjusted or changed by isolation analysis unit 270 to "medium" and the deviation score is adjusted or changed to "high".

In some embodiments, when isolation analysis unit 270 determines that the behavioral accuracy score is within the third behavioral accuracy score category (e.g., low behavioral accuracy score category) and the deviation score is within the second deviation score category (e.g., medium deviation score category), the user device is temporally logged out from the authentication network 170 for a fixed amount of time (e.g., n minutes) and based upon a similarity assessment of deviation scores of the plurality of devices that are not the current user device, the deviation score of the user device is adjusted such that the deviation score is in the first deviation score category. For example, in some embodiments, if the deviation score of other user devices registered to the user is similar to the deviation score of the current user device, the deviation score is changed to a "low" deviation score.

In some embodiments, when isolation analysis unit 270 determines that the behavioral accuracy score is within the third behavioral accuracy score category (e.g., low behavioral accuracy score category) and the deviation score is within the third deviation score category (e.g., high deviation score category), the user device is isolated from the authentication network 170. In some embodiments, when isolation analysis unit 270 determines that the behavioral accuracy score is within the third behavioral accuracy score category (e.g., low behavioral accuracy score category) and the deviation score is within the third deviation score category (e.g., high deviation score category), the user device is isolated from the authentication network 170 until a user of the user device reinitiates the registration process (e.g., a registration of the user and/or the user device). The isolation actions corresponding to the behavioral accuracy score categorizations and device score categorizations described with reference to FIG. 2 are further described with reference to FIG. 3.

FIG. 3 illustrates a Table 300 that depicts isolation actions 340 taken by isolation unit 130 based on an isolation analysis of user devices registered with the authentication network 170 (described previously with reference to FIG. 2). In some embodiments, the Table 300 includes columns that represent a behavior accuracy score 310, a deviation analysis 320, a deviation score 330, and an isolation action 340. In some embodiments, the behavior accuracy score 310, the deviation analysis 320, the deviation score 330, and the isolation action 340 map to the behavior accuracy score and behavior accuracy score categorization, the deviation analysis, the deviation score and the deviation score categorization, and the isolation actions described previously with reference to FIG. 2. As illustrated in Table 300 of FIG. 3, an isolation of a user device by isolation unit 130 occurs when the behavioral accuracy score is categorized as a "low" behavioral accuracy score and the deviation score is categorized as a "high" deviation score, thereby protecting the users of the authentication network 170 from the isolated user device.

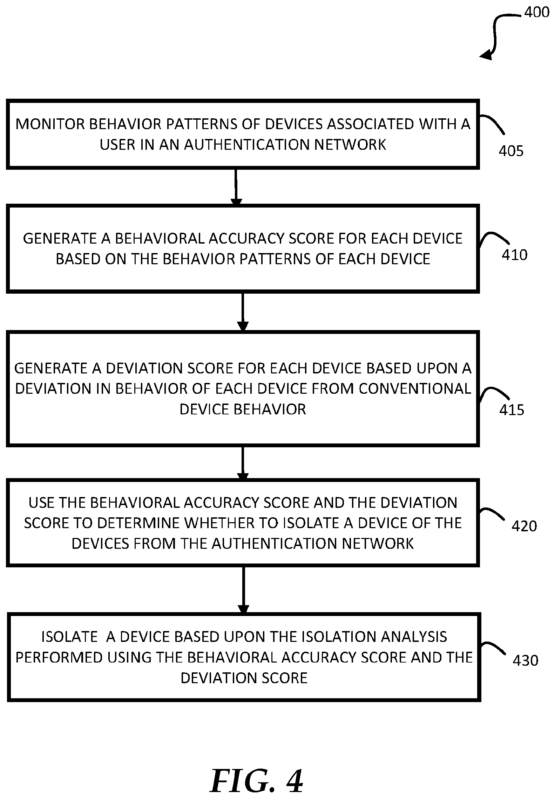

FIG. 4 is a flow diagram illustrating a method 400 for performing device isolation in accordance with some embodiments. The method, process steps, or stages illustrated in the figures may be implemented as an independent routine or process, or as part of a larger routine or process. Note that each process step or stage depicted may be implemented as an apparatus that includes a processor executing a set of instructions, a method, or a system, among other embodiments. In some embodiments, the method 400 is described with reference to the figures described herein.

In some embodiments, at operation 405, behavior patterns of a plurality of user devices (e.g., user device 112 and user device 113) associated with a user and registered with authentication network 170 are monitored in authentication network 170 by behavior monitoring unit 250. In some embodiments, at operation 410, a behavioral accuracy score is generated by behavior monitoring unit 250 for each user device of the plurality of user devices in the authentication network 170 based on the behavior patterns of each user device of the plurality of user devices. In some embodiments, at operation 415, a deviation score is generated by deviation analysis unit 260 for each user device of the plurality of user devices based on a deviation in behavior of each device of the plurality of user devices from conventional behavior of the user devices.

In some embodiments, at operation 420, the behavioral accuracy score and the deviation score are utilized to determine whether to isolate a user device of the plurality of user devices from the authentication network 170. In some embodiments, the behavioral accuracy score and the deviation score are associated with or used to generate behavior accuracy score category and deviation score category that are utilized to determine whether to isolate a user device of the plurality of user devices from the authentication network. In some embodiments, at operation 430, a user device of the plurality user devices is isolated from the authentication network based upon the isolation analysis performed by isolation analysis unit 270. In some embodiments, by utilizing the isolation methods described herein, the isolation analysis unit 270 improves upon existing networks by preventing unwanted user devices from staying in network. Furthermore, in some embodiments, the isolation system described herein provides technical benefits related to the improvement of computing technology, such as improvements to computing efficiency and the security of a network by, for example, utilizing an isolation analysis of a user device based on a deviation in behavior of the user device to have the authentication network self-police the user device and isolate the user device based on the deviation performed as part of the isolation analysis.

## Claims

1. A computer-implemented method, comprising:
monitoring behavior patterns of a plurality of devices associated with a user in an authentication network;
generating a behavioral accuracy score for each device of the plurality of devices in the authentication network based on the behavior patterns of each device of the plurality of devices;
determining whether the behavioral accuracy score of a first device of the plurality of devices is within a first behavioral accuracy score category, a second behavioral accuracy score category, or a third behavioral accuracy score category,
wherein the first behavioral accuracy score category is a high behavioral accuracy score category, the second behavioral accuracy score category is a medium behavioral accuracy score category, and the third behavioral accuracy score category is a low accuracy score category;
generating a deviation score for each device of the plurality of devices based on a deviation in behavior of each device of the plurality of devices from conventional device behavior;
determining whether the deviation score is within a first deviation score category, a second deviation score category, or a third deviation score category; and
using the behavioral accuracy score and the deviation score to determine whether to isolate a first device of the plurality of devices from the authentication network,
wherein, when the behavioral accuracy score is within the second behavioral accuracy score category and the deviation score is within the second deviation score category:
the first device is temporarily logged out from the authentication network, and
biometric authentication and two-factor authentication are requested to login to the authentication network, from a user of the first device, from a user device associated with the user that has received a behavioral accuracy score in the first behavioral accuracy score category.

2. The computer-implemented method of claim 1, wherein:
when the behavioral accuracy score is within the second behavioral accuracy score category and the deviation score is within the first deviation score category, the first device is temporarily logged out from the authentication network and biometric authentication is requested from a user of the first device to login to the authentication network.

3. The computer-implemented method of claim 1 or claim 2, wherein:
when the behavioral accuracy score is within the second behavioral accuracy score category and the deviation score is within the third deviation score category, the first device is temporarily logged out from the authentication network for a fixed amount of time and a determination is made based on the deviation score as to whether to proceed with actions corresponding to the first deviation score category or the second deviation score category.

4. The computer-implemented method of any of claims 1 to 3, wherein:
when the behavioral accuracy score is within the third behavioral accuracy score category and the deviation score is within the first deviation score category, the first device is temporarily logged out from the authentication network for a fixed amount of time and based upon a similarity assessment of deviation scores of the plurality of devices that are not the first device, the behavioral accuracy score of the first device is adjusted such that the behavioral accuracy score is in the second behavioral accuracy score category and the deviation score of the first device is in the third deviation score category.

5. The computer-implemented method of any of claims 1 to 4, wherein:
when the behavioral accuracy score is within the third behavioral accuracy score category and the deviation score is within the second deviation score category, the first device is temporarily logged out from the authentication network for a fixed amount of time and based upon a similarity assessment of deviation scores of the plurality of devices that are not the first device, the deviation score of the first device is adjusted such that the deviation score is in the first deviation score category.

6. The computer-implemented method of any of claims 1 to 5, wherein:
when the behavioral accuracy score is within the third behavioral accuracy score category and the deviation score is within the third deviation score category, the first device is isolated from the authentication network until a user of the first device reinitiates a registration of the first device.

7. The computer-implemented method of any of claims 1 to 6, wherein:
the first deviation score category is a low deviation score category, the second deviation score category is a medium deviation score category, and the third deviation score category is a high deviation score category.

8. A system, comprising:
a processor; and
a non-transitory computer readable medium coupled to the processor, the non-transitory computer readable medium comprising code that, when executed by the processor, causes the processor to perform the method of any of the preceding claims.

9. An apparatus, comprising:
an isolation analysis unit;
a behavior monitoring unit coupled to the isolation analysis unit; and a deviation analysis unit coupled to the behavior monitoring unit and the isolation analysis unit,
wherein, based upon an isolation assessment of a behavioral accuracy score and a deviation score associated with each device of a plurality of devices in an authentication network, the isolation analysis unit determines whether to isolate a first device from the plurality of devices of the authentication network,
wherein the isolation assessment comprises:
determining whether the behavioral accuracy score of the first device of the plurality of devices is within a first behavioral accuracy score category, a second behavioral accuracy score category, or a third behavioral accuracy score category,
wherein the first behavioral accuracy score category is a high behavioral accuracy score category, the second behavioral accuracy score category is a medium behavioral accuracy score category, and the third behavioral accuracy score category is a low accuracy score category; and
determining whether the deviation score is within a first deviation score category, a second deviation score category, or a third deviation score category;
wherein, when the behavioral accuracy score is within the second behavioral accuracy score category and the deviation score is within the second deviation score category:
the first device is temporarily logged out from the authentication network, and
biometric authentication and two-factor authentication are requested to login to the authentication network, from a user of the first device, from a user device associated with the user that has received a behavioral accuracy score in the first behavioral accuracy score category.

10. The apparatus of claim 9, wherein:
when the behavioral accuracy score is in the third behavioral accuracy score category and the deviation score is in a high deviation score category, the device is isolated from the authentication network until a user of the device reinitiates a registration of the device.

## Patentansprüche

1. Computerimplementiertes Verfahren, umfassend:
Überwachen von Verhaltensmustern einer Mehrzahl von Geräten, die mit einem Benutzer in einem Authentifizierungsnetzwerk assoziiert sind;
Erzeugen eines Verhaltensgenauigkeitswerts für jedes Gerät der Mehrzahl von Geräten in dem Authentifizierungsnetzwerk basierend auf den Verhaltensmustern jedes Geräts der Mehrzahl von Geräten;
Bestimmen, ob der Verhaltensgenauigkeitswert eines ersten Geräts der Mehrzahl von Geräten innerhalb einer ersten Verhaltensgenauigkeitswertkategorie, einer zweiten Verhaltensgenauigkeitswertkategorie oder einer dritten Verhaltensgenauigkeitswertkategorie liegt,
wobei die erste Verhaltensgenauigkeitswertkategorie eine hohe Verhaltensgenauigkeitswertkategorie ist, die zweite Verhaltensgenauigkeitswertkategorie eine mittlere Verhaltensgenauigkeitswertkategorie ist und die dritte Verhaltensgenauigkeitswertkategorie eine niedrige Verhaltensgenauigkeitswertkategorie ist;
Erzeugen eines Abweichungswerts für jedes Gerät der Mehrzahl von Geräten basierend auf einer Abweichung im Verhalten jedes Geräts der Mehrzahl von Geräten von dem üblichen Geräteverhalten;
Bestimmen, ob der Abweichungswert innerhalb einer ersten Abweichungswertkategorie, einer zweiten Abweichungswertkategorie oder einer dritten Abweichungswertkategorie liegt; und
Verwenden des Verhaltensgenauigkeitswerts und des Abweichungswerts, um zu bestimmen, ob ein erstes Gerät der Mehrzahl von Geräten von dem Authentifizierungsnetzwerk isoliert werden soll,
wobei, wenn der Verhaltensgenauigkeitswert innerhalb der zweiten Verhaltensgenauigkeitswertkategorie liegt und der Abweichungswert innerhalb der zweiten Abweichungswertkategorie liegt:
das erste Gerät vorübergehend von dem Authentifizierungsnetzwerk abgemeldet wird, und
biometrische Authentifizierung und Zwei-Faktor-Authentifizierung von einem Benutzer des ersten Geräts und von einem mit dem Benutzer assoziierten Benutzergerät, das einen Verhaltensgenauigkeitswert in der ersten Verhaltensgenauigkeitswertkategorie erhalten hat, angefordert werden, um sich an dem Authentifizierungsnetzwerk anzumelden.

2. Computerimplementiertes Verfahren nach Anspruch 1, wobei:
wenn der Verhaltensgenauigkeitswert innerhalb der zweiten Verhaltensgenauigkeitswertkategorie liegt und der Abweichungswert innerhalb der ersten Abweichungswertkategorie liegt, das erste Gerät vorübergehend von dem Authentifizierungsnetzwerk abgemeldet wird und die biometrische Authentifizierung von einem Benutzer des ersten Geräts angefordert wird, um sich an dem Authentifizierungsnetzwerk anzumelden.

3. Computerimplementiertes Verfahren nach Anspruch 1 oder Anspruch 2, wobei:
wenn der Verhaltensgenauigkeitswert innerhalb der zweiten Verhaltensgenauigkeitswertkategorie liegt und der Abweichungswert innerhalb der dritten Abweichungswertkategorie liegt, das erste Gerät vorübergehend für eine feste Zeitdauer von dem Authentifizierungsnetzwerk abgemeldet wird und basierend auf dem Abweichungswert bestimmt wird, ob mit Maßnahmen entsprechend der ersten Abweichungswertkategorie oder der zweiten Abweichungswertkategorie fortgefahren werden soll.

4. Computerimplementiertes Verfahren nach einem der Ansprüche 1 bis 3, wobei:
wenn der Verhaltensgenauigkeitswert innerhalb der dritten Verhaltensgenauigkeitswertkategorie liegt und der Abweichungswert innerhalb der ersten Abweichungswertkategorie liegt, das erste Gerät vorübergehend für eine feste Zeitdauer von dem Authentifizierungsnetzwerk abgemeldet wird und basierend auf einer Ähnlichkeitsbewertung von Abweichungswerten der Mehrzahl von Geräten, die nicht das erste Gerät sind, der Verhaltensgenauigkeitswert des ersten Geräts so angepasst wird, dass der Verhaltensgenauigkeitswert in der zweiten Verhaltensgenauigkeitswertkategorie liegt und der Abweichungswert des ersten Geräts in der dritten Abweichungswertkategorie liegt.

5. Computerimplementiertes Verfahren nach einem der Ansprüche 1 bis 4, wobei:
wenn der Verhaltensgenauigkeitswert innerhalb der dritten Verhaltensgenauigkeitswertkategorie liegt und der Abweichungswert innerhalb der zweiten Abweichungswertkategorie liegt, das erste Gerät vorübergehend für eine feste Zeitdauer von dem Authentifizierungsnetzwerk abgemeldet wird und basierend auf einer Ähnlichkeitsbewertung von Abweichungswerten der Mehrzahl von Geräten, die nicht das erste Gerät sind, der Abweichungswert des ersten Geräts so angepasst wird, dass der Abweichungswert in der ersten Abweichungswertkategorie liegt.

6. Computerimplementiertes Verfahren nach einem der Ansprüche 1 bis 5, wobei:
wenn der Verhaltensgenauigkeitswert innerhalb der dritten Verhaltensgenauigkeitswertkategorie liegt und der Abweichungswert innerhalb der dritten Abweichungswertkategorie liegt, das erste Gerät von dem Authentifizierungsnetzwerk isoliert wird, bis ein Benutzer des ersten Geräts erneut eine Registrierung des ersten Geräts initiiert.

7. Computerimplementiertes Verfahren nach einem der Ansprüche 1 bis 6, wobei:
die erste Abweichungswertkategorie eine niedrige Abweichungswertkategorie ist, die zweite Abweichungswertkategorie eine mittlere Abweichungswertkategorie ist und die dritte Abweichungswertkategorie eine hohe Abweichungswertkategorie ist.

8. System, umfassend:
einen Prozessor; und
ein nichtflüchtiges computerlesbares Medium, das mit dem Prozessor gekoppelt ist, wobei das nichtflüchtige computerlesbare Medium Code umfasst, der, bei Ausführung durch den Prozessor, den Prozessor veranlasst, das Verfahren nach einem der vorhergehenden Ansprüche durchzuführen.

9. Vorrichtung, Folgendes umfassend:
eine Isolationsanalyseeinheit;
eine Verhaltensüberwachungseinheit, die mit der Isolationsanalyseeinheit gekoppelt ist; und
eine Abweichungsanalyseeinheit, die mit der Verhaltensüberwachungseinheit und der Isolationsanalyseeinheit gekoppelt ist,
wobei die Isolationsanalyseeinheit basierend auf einer Isolationsbewertung eines Verhaltensgenauigkeitswerts und eines Abweichungswerts, die mit jedem Gerät einer Mehrzahl von Geräten in einem Authentifizierungsnetzwerk assoziiert sind, bestimmt, ob ein erstes Gerät aus der Mehrzahl von Geräten des Authentifizierungsnetzwerks isoliert werden soll,
wobei die Isolationsbewertung Folgendes umfasst:
Bestimmen, ob der Verhaltensgenauigkeitswert des ersten Geräts der Mehrzahl von Geräten innerhalb einer ersten Verhaltensgenauigkeitswertkategorie, einer zweiten Verhaltensgenauigkeitswertkategorie oder einer dritten Verhaltensgenauigkeitswertkategorie liegt,
wobei die erste Verhaltensgenauigkeitswertkategorie eine hohe Verhaltensgenauigkeitswertkategorie ist, die zweite Verhaltensgenauigkeitswertkategorie eine mittlere Verhaltensgenauigkeitswertkategorie ist und die dritte Verhaltensgenauigkeitswertkategorie eine niedrige Verhaltensgenauigkeitswertkategorie ist; und Bestimmen, ob der Abweichungswert innerhalb einer ersten Abweichungswertkategorie, einer zweiten Abweichungswertkategorie oder einer dritten Abweichungswertkategorie liegt;
wobei, wenn der Verhaltensgenauigkeitswert innerhalb der zweiten Verhaltensgenauigkeitswertkategorie liegt und der Abweichungswert innerhalb der zweiten Abweichungswertkategorie liegt:
das erste Gerät vorübergehend von dem Authentifizierungsnetzwerk abgemeldet wird, und
biometrische Authentifizierung und Zwei-Faktor-Authentifizierung von einem Benutzer des ersten Geräts und von einem mit dem Benutzer assoziierten Benutzergerät, das einen Verhaltensgenauigkeitswert in der ersten Verhaltensgenauigkeitswertkategorie erhalten hat, angefordert werden, um sich an dem Authentifizierungsnetzwerk anzumelden.

10. Vorrichtung nach Anspruch 9, wobei:
wenn der Verhaltensgenauigkeitswert in der dritten Verhaltensgenauigkeitswertkategorie liegt und der Abweichungswert in einer hohen Abweichungswertkategorie liegt, das Gerät von dem Authentifizierungsnetzwerk isoliert wird, bis ein Benutzer des Geräts erneut eine Registrierung des Geräts initiiert.

## Revendications

1. Procédé mis en œuvre par ordinateur, comprenant :
la surveillance de modèles de comportement d'une pluralité de dispositifs associés à un utilisateur dans un réseau d'authentification ;
la génération d'un score de précision comportementale pour chaque dispositif de la pluralité de dispositifs dans le réseau d'authentification sur la base des modèles de comportement de chaque dispositif de la pluralité de dispositifs ;
le fait de déterminer si le score de précision comportementale d'un premier dispositif de la pluralité de dispositifs se situe au sein d'une première catégorie de score de précision comportementale, d'une deuxième catégorie de score de précision comportementale ou d'une troisième catégorie de score de précision comportementale,
dans lequel la première catégorie de score de précision comportementale est une catégorie de score de précision comportementale élevée, la deuxième catégorie de score de précision comportementale est une catégorie de score de précision comportementale moyenne, et la troisième catégorie de score de précision comportementale est une catégorie de score de précision faible ;
la génération d'un score d'écart pour chaque dispositif de la pluralité de dispositifs sur la base d'un écart de comportement de chaque dispositif de la pluralité de dispositifs par rapport à un comportement de dispositif conventionnel ;
le fait de déterminer si le score d'écart se situe au sein d'une première catégorie de score d'écart, d'une deuxième catégorie de score d'écart ou d'une troisième catégorie de score d'écart ; et
l'utilisation du score de précision comportementale et du score d'écart pour déterminer s'il faut isoler un premier dispositif de la pluralité de dispositifs du réseau d'authentification,
dans lequel, lorsque le score de précision comportementale se situe au sein de la deuxième catégorie de score de précision comportementale et que le score d'écart se situe au sein de la deuxième catégorie de score d'écart :
le premier dispositif est temporairement déconnecté du réseau d'authentification, et
une authentification biométrique et une authentification à deux facteurs sont demandées pour se connecter au réseau d'authentification, à un utilisateur du premier dispositif, au moyen d'un dispositif utilisateur associé à l'utilisateur qui a reçu un score de précision comportementale dans la première catégorie de score de précision comportementale.

2. Procédé mis en œuvre par ordinateur selon la revendication 1, dans lequel :
lorsque le score de précision comportementale se situe au sein de la deuxième catégorie de score de précision comportementale et que le score d'écart se situe au sein de la première catégorie de score d'écart, le premier dispositif est temporairement déconnecté du réseau d'authentification et une authentification biométrique est demandée à un utilisateur du premier dispositif pour se connecter au réseau d'authentification.

3. Procédé mis en œuvre par ordinateur selon la revendication 1 ou la revendication 2, dans lequel :
lorsque le score de précision comportementale se situe au sein de la deuxième catégorie de score de précision comportementale et que le score d'écart se situe au sein de la troisième catégorie de score d'écart, le premier dispositif est temporairement déconnecté du réseau d'authentification pendant une durée fixe et une détermination est effectuée sur la base du score d'écart quant à savoir s'il convient de procéder aux actions correspondant à la première catégorie de score d'écart ou à la deuxième catégorie de score d'écart.

4. Procédé mis en œuvre par ordinateur selon l'une quelconque des revendications 1 à 3, dans lequel :
lorsque le score de précision comportementale se situe au sein de la troisième catégorie de score de précision comportementale et que le score d'écart se situe au sein de la première catégorie de score d'écart, le premier dispositif est temporairement déconnecté du réseau d'authentification pendant une durée fixe et, sur la base d'une évaluation de similitude des scores d'écart de la pluralité de dispositifs qui ne sont pas le premier dispositif, le score de précision comportementale du premier dispositif est ajusté de telle sorte que le score de précision comportementale se situe dans la deuxième catégorie de score de précision comportementale et que le score d'écart du premier dispositif se situe dans la troisième catégorie de score d'écart.

5. Procédé mis en œuvre par ordinateur selon l'une quelconque des revendications 1 à 4, dans lequel :
lorsque le score de précision comportementale se situe au sein de la troisième catégorie de score de précision comportementale et que le score d'écart se situe au sein de la deuxième catégorie de score d'écart, le premier dispositif est temporairement déconnecté du réseau d'authentification pendant une durée fixe et, sur la base d'une évaluation de similitude des scores d'écart de la pluralité de dispositifs qui ne sont pas le premier dispositif, le score d'écart du premier dispositif est ajusté de telle sorte que le score d'écart se situe dans la première catégorie de score d'écart.

6. Procédé mis en œuvre par ordinateur selon l'une quelconque des revendications 1 à 5, dans lequel :
lorsque le score de précision comportementale se situe au sein de la troisième catégorie de score de précision comportementale et que le score d'écart se situe au sein de la troisième catégorie de score d'écart, le premier dispositif est isolé du réseau d'authentification jusqu'à ce qu'un utilisateur du premier dispositif relance un enregistrement du premier dispositif.

7. Procédé mis en œuvre par ordinateur selon l'une quelconque des revendications 1 à 6, dans lequel :
la première catégorie de score d'écart est une catégorie de score d'écart faible, la deuxième catégorie de score d'écart est une catégorie de score d'écart moyen, et la troisième catégorie de score d'écart est une catégorie de score d'écart élevé.

8. Système, comprenant :
un processeur ; et
un support non transitoire lisible par ordinateur couplé au processeur, le support non transitoire lisible par ordinateur comprenant un code qui, lorsqu'il est exécuté par le processeur, amène le processeur à réaliser le procédé de l'une quelconque des revendications précédentes.

9. Appareil, comprenant :
une unité d'analyse d'isolement ;
une unité de surveillance de comportement couplée à l'unité d'analyse d'isolement ; et
une unité d'analyse d'écart couplée à l'unité de surveillance de comportement et à l'unité d'analyse d'isolement,
dans lequel, sur la base d'une évaluation d'isolement d'un score de précision comportementale et d'un score d'écart associés à chaque dispositif d'une pluralité de dispositifs dans un réseau d'authentification, l'unité d'analyse d'isolement détermine s'il faut isoler un premier dispositif de la pluralité de dispositifs du réseau d'authentification,
dans lequel l'évaluation de l'isolement comprend :
le fait de déterminer si le score de précision comportementale du premier dispositif de la pluralité de dispositifs se situe au sein d'une première catégorie de score de précision comportementale, d'une deuxième catégorie de score de précision comportementale ou d'une troisième catégorie de score de précision comportementale,
dans lequel la première catégorie de score de précision comportementale est une catégorie de score de précision comportementale élevée, la deuxième catégorie de score de précision comportementale est une catégorie de score de précision comportementale moyenne, et la troisième catégorie de score de précision comportementale est une catégorie de score de précision faible ; et le fait de déterminer si le score d'écart se situe au sein d'une première catégorie de score d'écart, d'une deuxième catégorie de score d'écart ou d'une troisième catégorie de score d'écart ;
dans lequel, lorsque le score de précision comportementale se situe au sein de la deuxième catégorie de score de précision comportementale et que le score d'écart se situe au sein de la deuxième catégorie de score d'écart :
le premier dispositif est temporairement déconnecté du réseau d'authentification, et
une authentification biométrique et une authentification à deux facteurs sont demandées pour se connecter au réseau d'authentification, à un utilisateur du premier dispositif, au moyen d'un dispositif utilisateur associé à l'utilisateur qui a reçu un score de précision comportementale dans la première catégorie de score de précision comportementale.

10. Appareil selon la revendication 9, dans lequel :
lorsque le score de précision comportementale se situe dans la troisième catégorie de score de précision comportementale et que le score d'écart se situe dans la catégorie de score d'écart élevé, le dispositif est isolé du réseau d'authentification jusqu'à ce qu'un utilisateur du dispositif relance un enregistrement du dispositif.
